# EUROPEAN PATENT APPLICATION

(11) **EP 1 348 541 A1**
(43) Date of publication of application: **01.10.2003**
(21) Application number: 03006468.7
(22) Date of filing: 21.03.2003
(51) Int. Cl.: B32B 27/36, B65D 65/46

(54) **Multi-layered polyester film**

(30) Priority: 25.03.2002 JP 2002083654
(71) Applicant: MITSUI CHEMICALS, INC., Tokyo (JP)
(72) Inventor: Kuroki, Takayuki, Mitsui Chemicals, Inc., Ichihara-shi, Chiba 299-0108 (JP); Takehara, Akinori, Mitsui Chemicals, Inc., Ichihara-shi, Chiba 299-0108 (JP); Obuchi, Shoji, Mitsui Chemicals, Inc., Ichihara-shi, Chiba 299-0108 (JP)
(74) Representative: Strehl Schübel-Hopf & Partner

(57) **Abstract**

The invention is to provide a multi-layered polyester film having good heat-sealability and transparency and suitable to secondary working into bags, etc. The film comprises a layer (layer A) that contains a polyhydroxycarboxylic acid-type aliphatic polyester (polyester A) and a layer (layer B) that contains a diol-dicarboxylic acid polycondensation-type polyester (polyester B).

## Description

### BACKGROUND OF THE INVENTION

### FIELD OF THE INVENTION

The present invention relates to a multi-layered film which comprises a layer (layer A) that contains a polyhydroxycarboxylic acid-type aliphatic polyester (polyester A) and a layer (layer B) that contains a diol-dicarboxylic acid polycondensation-type polyester (polyester B) having constitutive components of an aliphatic dicarboxylic acid, an aromatic dicarboxylic acid and an aliphatic diol, and to a bag formed of the film. More precisely, the invention provides a multi-layered film which comprises a layer (layer A) that contains a polyhydroxycarboxylic acid-type aliphatic polyester (polyester A) and a layer (layer B) that contains a diol-dicarboxylic acid polycondensation-type polyester (polyester B) having constitutive components of an aliphatic dicarboxylic acid, an aromatic dicarboxylic acid and an aliphatic diol, and which has good heat-sealability and good transparency and is degradable in the natural environment after use; an oriented film produced by stretching it; and a bag formed of the film.

### DESCRIPTION OF THE RELATED ART

Heretofore, films of good heat-sealability are needed for wide-range applications of wrapping and packaging materials for ordinary goods, foods and drinks, fibrous materials, medicines and others.

Heat-sealing means that multiple films put in layers are sealed under heat and pressure by the use of any of hot bars, hot plates, hot rolls and the like.

Films of good heat-sealability are meant to be scalable under heat at different temperatures in a broad range to have a stable adhesion strength enough for practical use.

One typical example of plastic films of good heat-sealability heretofore used in the field of wrapping and packaging applications is polyvinylidene chloride-coated, moisture-proof cellophane.

Cellophane is produced in a cast film process that comprises chemically processing pulp to dissolve it and casting it into film, and its productivity is therefore low. In addition, the waste treatment in the process is troublesome. Anyhow, cellophane is problematic in that its production costs are high from the economical viewpoint and for the environmental protection.

In order to solve the problems in that situation, inexpensive, petroleum-derived general films of polyolefin, aromatic polyester, polyvinyl chloride or the like is blended and laminated with a different type of material to produce laminate films of goodheat-sealability, and they are used for wrapping and packaging applications.

Moldings of the resin of the type mentioned above are highly transparent, but if not correctly processed before disposed of, they will increase the amount of their wastes. In addition, since they do not almost degrade in the natural environment, they will semi-permanently remain in the ground even after disposed of for land reclamation. On the other hand, polyhydroxycarboxylic acid-type aliphatic polyesters and diol-dicarboxylic acid polycondensation-type polyesters have been developed for thermoplastic and biodegradable polymers. These polymers are characterized in that, when kept wetted in soil or seawater, they begin to degrade in a few weeks and completely degrade within a period of from about one year to a few years, and the degradation products are lactic acid, carbon dioxide and water all harmless to human bodies.

Films of such aliphatic polyesters are comparable to or rather better than ordinary resin films in point of the physical properties, optical properties and thermal properties and are biodegradable, and therefore they are expected to have wide-range applications in the field of wrapping and packaging industry.

However, the heat-sealability of films of aliphatic polyesters, especially those of lactic acid-type polymers is poor, and secondary working of the films into bags and others is difficult, and this is a problem with the films in their practical use.

JP-A 8-323946 discloses a biodegradable, multi-layered plastic film which comprises a film of a composition consisting essentially of a polylactic acid-type polymer and in which at least one outermost layer is formed of a biodegradable plastic film. JP-A 9-157408 discloses a multi-layered film of a polylactic acid polymer and an aliphatic polyester having Tg ≤ 0°C. These disclose that a polymer obtained through condensation of an aliphatic diol and an aliphatic dicarboxylic acid and a polymer obtained through ring-cleavage polymerization of a cyclic lactone are effective for improving heat-sealability of films. The heat-sealability of the films disclosed could be improved, but the films could not still satisfy both good heat sealability and good transparency.

### SUMMARY OF THE INVENTION

An object of the invention is to provide a multi-layered film which comprises a layer (layer A) that contains a polyhydroxycarboxylic acid-type aliphatic polyester (polyester A) and a layer (layer B) that contains a diol-dicarboxylic acid polycondensation-type polyester (polyester B) having constitutive components of an aliphatic dicarboxylic acid, an aromatic dicarboxylic acid and an aliphatic diol, and which has good heat-sealability and good transparency; an oriented film produced by stretching it; and a bag formed of the film.

Specifically, the invention provides a multi-layered film which comprises a layer (layer A) that contains a polyhydroxycarboxylic acid-type aliphatic polyester (polyester A) and a layer (layer B) that contains a diol-dicarboxylic acid polycondensation-type polyester (polyester B) having constitutive components of an aliphatic dicarboxylic acid, an aromatic dicarboxylic acid and an aliphatic diol.

In one preferred embodiment of the invention, at least any one layer of the film is at least monoaxially stretched by 1.5 to 7 times to give an oriented, multi-layered polyester film.

The invention also provides a bag produced by partly heat-sealing the above-mentioned, non-oriented or oriented multi-layered film.

### DESCRIPTION OF THE PREFERRED EMBODIMENTS

The invention is described in detail hereinunder. First described are the constitutive layers in the invention, the layer (layer A) that contains a polyhydroxycarboxylic acid-type aliphatic polyester (polyester A) and the layer (layer B) that contains a diol-dicarboxylic acid polycondensation-type polyester (polyester B) having constitutive components of an aliphatic dicarboxylic acid, an aromatic dicarboxylic acid and an aliphatic diol.

### [Polyhydroxycarboxylic acid-type aliphatic polyester (polyester A)]:

The polyhydroxycarboxylic acid-type aliphatic polyester (polyester A) for use in the invention is an aliphatic polyester that contains hydroxycarboxylic acid units in the molecule. Concretely, it includes the following:
<1> a homopolymer of an aliphatic hydroxycarboxylic acid,
<2> a copolymer of different types of aliphatic hydroxycarboxylic acids,
<3> an aliphatic polyester that contains polyfunctional polysaccharides and hydroxycarboxylic acid units,
<4> and their mixture.

For the starting material for the polyhydroxycarboxylic acid-type aliphatic polyester (polyesterA) used are aliphatic hydroxycarboxylic acids. The aliphatic hydroxycarboxylic acids are preferably those having from 2 to 10 carbon atoms. Concretely, their preferred examples are L-lactic acid, D-lactic acid, DL-lactic acid, glycolic acid, 3-hydroxybutyric acid, 4-hydroxybutyric acid, 4-hydroxyvaleric acid, 5-hydroxyvaleric acid, and 6-hydroxycaproic acid. Also usable are cyclic esters of aliphatic hydroxycarboxylic acids, for example, a dimer of lactic acid, lactide, and acyclic ester of 6-hydroxycaproic acid, ε-caprolactone.

In the invention, the polyhydroxycarboxylic acid-type aliphatic polyester (polyester A) preferably has from 50 to 100 mol% of polylactic acid repetitive units based on the number of mols of all the repetitive units in the molecule.

The polyhydroxycarboxylic acid-type aliphatic polyester (polyester A) may be obtained according to a method of direct polycondensation with dehydration of the above-mentioned starting material, or a method of ring-opening polymerization of a cyclic dimer of the above-mentioned lactic acid or hydroxycarboxylic acid, for example, a cyclic ester such as lactide, glycolide and ε-caprolactone.

In case where the polyester is prepared in the method of direct polycondensation with dehydration, the starting material, aliphatic hydroxycarboxylic acid is preferably polycondensed through azeotropic dehydration in the presence of an organic solvent, especially a phenyl ether-type solvent, and more preferably in such a manner that water is removed from the solvent having been azeotropically removed from the system and the resulting, substantially water-free solvent is returned to the reaction system. The process gives a high-molecular polymer having a mechanical strength suitable to the invention. Preferably, the weight average molecular weight of the polymer is as high as possible within the moldable range thereof, more preferably falling between 30,000 and 1,000,000.

The polyester A may contain the other aliphatic polyester such as an aliphatic diol-aliphatic dicarboxylic acid polycondensation-type polyester and a resin for general use such as a polyolefin resin, not interfering with the object of the invention.

### [Layer (layer A) that contains the polyhydroxycarboxylic acid-type aliphatic polyester (polyester A)]:

In the invention, the layer A of the multi-layered polyester film contains the polyhydroxycarboxylic acid-type aliphatic polyester (polyester A).

Concretely, the layer A may contain from 50 to 100 % by weight of the polyhydroxycarboxylic acid-type aliphatic polyester (polyester A).

### [Diol-dicarboxylic acid polycondensation-type polyester (polyester B) having constitutive components of aliphatic dicarboxylic acid, aromatic dicarboxylic acid and aliphatic diol]:

In the diol-dicarboxylic acid polycondensation-type polyester (polyester B) having constitutive components of an aliphatic dicarboxylic acid, an aromatic dicarboxylic acid and an aliphatic diol, the dicarboxylic acid-derived structural units for the repetitive units to constitute the molecule of the polyester include those of aliphatic dicarboxylic acids, aromatic dicarboxylic acids and their mixtures. In the polyester, the diol-derived structural units include those of aliphatic diols and their mixtures. Regarding the starting materials for the polymer, the diols are, for example, aliphatic diols having from 2 to 10 carbon atoms. Concretely, they include ethylene glycol, diethylene glycol, triethylene glycol, propylene glycol, dipropylene glycol, 1,3-butanediol, 1,4-butanediol, 3-methyl-1,5-pentanediol, 1,6-hexanediol, 1,9-nonanediol, neopentyl glycol, tetramethylene glycol, and 1,4-cyclohexanedimethanol. These may be used either singly or as combined.

The dicarboxylic acids for use herein may be aromatic and/or aliphatic dicarboxylic acids. The aromatic dicarboxylic acid includes phthalic acid, isophthalic acid, and terephthalic acid. Preferred examples of the aliphatic dicarboxylic acids are oxalic acid, succinic acid, malonid acid, glutaric acid, adipic acid, pimelic acid, suberic acid, azelaic acid, undecane-diacid, dodecane-diacid, and their anhydrides. The dicarboxylic acids may be mixed with their anhydrides, and they may be used either singly or as combined.

For the constitutive components of the diol-dicarboxylic acid polycondensation-type polyester (polyester B) having the constitutive components of such an aliphatic dicarboxylic acid, an aromatic dicarboxylic acid and an aliphatic diol, it is desirable that the diol is 1,4-butanediol and the dicarboxylic acids are adipic acid and terephthalic acid. Regarding the dicarboxylic acid units in the polyester, it is more desirable that the adipic acid-derived structural units account for from 10 to 90 mol% and the terephthalic acid-derived structural units for from 10 to 90 mol%, based on the number of mols of all the diol-derived structural units in the molecule.

The method of producing the diol-dicarboxylic acid polycondensation-type polyester (polyester B) having constitutive components of an aliphatic dicarboxylic acid, an aromatic dicarboxylic acid and an aliphatic diol, which is to form a layer (layer B) that contains the polyester B, is not specifically defined.

Preferably, the weight average molecular weight of the diol-dicarboxylic acid polycondensation-type polyester (polyester B) that has such constitutive components of an aliphatic dicarboxylic acid, an aromatic dicarboxylic acid and an aliphatic diol is as high as possible within the moldable range thereof, more preferably falling between 30,000 and 1,000,000.

The polyester B may contain the other aliphatic polyester such as a polyhydroxycarboxylic acid and a resin for general use such as a polyolefin resin, not interfering with the object of the invention.

The diol-dicarboxylic acid polycondensation-type polyester (polyester B) for use in the invention, which has constitutive components of an aliphatic dicarboxylic acid, an aromatic dicarboxylic acid and an aliphatic diol, may be resin available on the market. One example of the commercially-available resin for the polyester is Ecoflex (trade name by BASF).

### [Layer (layer B) that contains diol-dicarboxylic acid polycondensation-type polyester (polyester B) having constitutive components of aliphatic dicarboxylic acid, aromatic dicarboxylic acid and aliphatic diol]:

In the invention, another layer (layer B) may contain from 50 to 100 % by weight of the diol-dicarboxylic acid polycondensation-type polyester (polyester B) having constitutive components of an aliphatic dicarboxylic acid, an aromatic dicarboxylic acid and an aliphatic diol.

A modifier may be used in the invention, and it may be powder of metal oxides, hydroxides, carbonates, sulfates or silicates with magnesium, calcium, barium, boron, aluminium, silicon, titanium, zirconium, hafnium or the like. These may be used either singly or as combined. Of those, preferred are calcium carbonate, magnesium carbonate, barium sulfate, titanium dioxide, magnesium silicate, silica, talc, kaolin, glass balloons, etc. More preferred are calcium carbonate, barium sulfate, silica, titanium dioxide, and talc.

The modifier content may be from 0.01 to 20 parts by weight, more preferably from 0.1 to 5 parts by weight, based on 100 parts by weight of the resin that forms the outermost layer of the multi-layered film of the invention.

Of the film of the invention, the layer (layer A) that contains the polyhydroxycarboxylic acid-type aliphatic polyester (polyester A) and the layer (layer B) that contains the diol-dicarboxylic acid polycondensation-type polyester (polyester B) having constitutive components of an aliphatic dicarboxylic acid, an aromatic dicarboxylic acid and an aliphatic diol may contain any other modifier, depending on the use of the film and not interfering with the object of the invention. The additional modifier includes, for example, antiblocking agent; lubricant such as hydrocarbons (e.g., liquid paraffin, polyethylene wax), fatty acids (e.g., stearic acid), hydroxy-fatty acids, fatty acid amides, alkylenebis-fatty acid amides, fatty acid-lower alcohol esters, fatty acid-polyalcohol esters, fatty acid-polyglycol esters, aliphatic alcohols, polyalcohols, polyglycols, and metal soaps (e.g., calcium stearate); antistatic agent such as fatty acid salts, higher alcohol-sulfate esters, liquid fatty oil-sulfate ester salts, aliphatic amine and aliphatic amide-sulfate salts, aliphatic alcohol-phosphate ester salts, sulfonate salts of dibasic fatty acid esters, aliphatic amide-sulfonate salts, alkylallylsulfonate salts, aliphatic amine salts, quaternary ammonium salts, alkylpyridinium salts, polyoxyethylene-alkyl ethers, polyoxyethylene-alkylphenol ethers, polyoxyethylene-alkyl esters, sorbitan-alkyl esters, polyoxyethylene-sorbitan-alkyl esters, imidazoline derivatives, higher alkylamines; antifoggant such as glycerin-fatty acid esters (e.g., glycerin monostearate), sorbitan-fatty acid esters (e.g., sorbitan monolaurate, sorbitan monooleate), polyglycerin-fatty acid esters, propylene glycol-fatty acid esters; UV absorbent such as benzotriazoles (e.g., 2-(2'-hydroxy-5'-methylphenyl)benzotriazole), benzophenones (e.g., 2-hydroxy-4-methoxybenzophenone), salicylic acid derivatives (e.g., p-tert-butylphenyl salicylate); thermal stabilizer, antioxidant and discoloration inhibitor such as phenols (e.g., paramethoxyphenol), phosphites (e.g., triphenyl phosphite), sulfur compounds (e.g., 2-mercaptobenzimidazole), amines (e.g., phenylnaphthylamine); filler such as barium sulfate, titanium oxide, kaolin, carbon black; pigment; flame retardant such as halogen compounds (e.g., decabromodiphenyl ether), antimony compounds (e.g., antimony trioxide), and plasticizer such as glycerin-fatty acid esters, polyglycerin-fatty acid esters and the like.

Next described hereinunder are some examples of the method for producing the film of the invention which comprises the player (layer A) that contains the polyhydroxycarboxylic acid-type aliphatic polyester (polyester A) and the layer (layer B) that contains the diol-dicarboxylic acid polycondensation-type polyester (polyester B) having constitutive components of an aliphatic dicarboxylic acid, an aromatic dicarboxylic acid and an aliphatic diol. For adding a modifier to the polyhydroxycarboxylic acid-type aliphatic polyester (polyester A) and the diol-dicarboxylic acid polycondensation-type polyester (polyester B) and mixing them, for example, employable is a method that comprises uniformly mixing the resin with the modifier in a high-speed stirrer or a low-speed stirrer followed by melting and kneading the resulting mixture in a high-performance single-screw or multi-screw extruder. Regarding its shape, the resin composition in the invention is preferably in the form of pellets, rods, powder or the like.

The resin composition thus obtained in the manner as above is melt-extruded through an extruder equipped with a T-die to give a film. In this step, films of the layer A and the layer B may be separately prepared and laminated later to give the intended multi-layered film. Alternatively, the two may be co-extruded through an co-extruder equipped with a multi-manifold die or a feed block. Thus obtained, the film may be stretched in the machine direction by the use of rolls and then in the transverse direction by the use of a tenter. After thus stretched, the film may be heat-set under tension.

Regarding the layer constitution thereof, the multi-layered film of the invention shall have at least two layers of A/B, B/A/B, A/B/A/B, A/B/ ... /B, etc. For its better heat-sealability, at least one outermost layer of the film must be formed of the layer B.

In case where one outermost layer of the film is formed of the layer B, the thickness ratio of the layer Bis preferably from 0.1 to 60 % of the overall thickness of the film, in view of the heat-seal strength and the transparency of the film. More preferably, it is from 1 to 30 %. In case where two outermost layers of the film are both formed of the layer B, the total thickness of the two outermost layers B is preferably from 0.1 to 60 % of the overall thickness of the film, more preferably from 1 to 30 %.

The melt extrusion temperature of the aliphatic polyester composition that contains the above-mentioned various types of modifiers preferably falls between 100 and 280°C, more preferably between 130 and 250°C. If the molding temperature is too low, the molding could not be stabilized with ease and, in addition, the molding system will often undergo overloading. On the contrary, if the molding temperature is too high, it is also unfavorable since the aliphatic polyester may decompose whereby the molecular weight of the polymer may decrease, the strength thereof may decrease and the polymer may discolor.

Thus produced, the multi-layered film may be stretched at least monoaxially in any of the machine direction (the direction of resin flow) or the transverse direction (the direction perpendicular to the machine direction) by 1.5 to 7 times to give the oriented film of the invention. Preferably, the film is stretched biaxially in both the machine direction and the transverse direction. The stretching temperature preferably falls between the glass transition temperature (Tg) of the aliphatic polyester and (Tg + 50)°C, more preferably between Tg and (Tg + 30)°C. For improving the heat resistance and the dimensional stability thereof, the film may be, after stretched, heat-set under tension at a temperature not lower than (Tg + 10)°C but lower then the melting point thereof.

The multi-layered film that comprises the polyester of the invention may be finished in the form of rolls, tapes, cut sheets or sleeves (seamless) by suitably determining the process condition in accordance with the object.

If desired, the multi-layered film of the invention may be coated with a surface layer having a function of static charge prevention, fogging resistance, stickiness, gas barrier capability, airtight adhesiveness, easy adhesiveness or the like. For example, an aqueous coating liquid that contains an antistatic agent may be applied to one or both surfaces of the film and dried to form an antistatic layer thereon. For applying such an aqueous coating liquid, employable is any known method. Concretely, employable for it is any of spraying, air-knife coating, reverse coating, kiss coating, gravure coating, Meyer's bar coating, roll brushing, doctor-blade coating or the like.

An acrylic resin adhesive, for example, a copolymer prepared through copolymerization of an essential ingredient such as ethyl acrylate, butyl acrylate or 2-ethylhexyl acrylate with any other vinylic monomer is uniformly dissolved in an organic solvent to prepare a solvent-based coating liquid, or it is granularly dispersed in water to prepare an aqueous emulsion-based coating liquid. Thus prepared, the coating liquid may be applied to the film and dried thereon in a known method to thereby make the film adhesive.

Also if desired, the multi-layered film that comprises the polyester of the invention may be further laminated with any other resin or film so as to be coated with the layer thereof having a function of static charge prevention, fogging resistance, stickiness, gas barrier capability, airtight adhesiveness, easy adhesiveness or the like. For this, employable is any known method of extrusion lamination, dry lamination or the like.

### EXAMPLES

The invention is described in more detail with reference to the following Examples, which demonstrate some embodiments of the invention and are not intended to restrict the scope of the invention.

### Production Example 1:

100 parts by weight of L-lactide, 0.01 parts by weight of stannous octanoate, and 0.03 parts by weight of lauryl alcohol were put into a thick-wall cylindrical stainless polymerization reactor equipped with a stirrer, degassed for 2 hours in vacuum, and then purged with nitrogen gas. With stirring it in a nitrogen atmosphere, the resulting mixture was heated at 200°C for 3 hours. While still kept at the elevated temperature, the reactor was gradually degassed to a reduced pressure of 3 mmHg by the action of a vacuum pump fitted thereto via an exhaust pipe and a glass receiver. One hour after the start of degassing, the monomer and other low-molecular volatile components did not evaporate any more. Then, the reactor was purged with nitrogen, and the polymer therein, aliphatic polyester resin A was taken out through its bottom in the form of strings. This was pelletized into pellets having a mean diameter of 3 mm and a length of 3 mm. The weight-average molecular weight Mw of the resin was about 130,000.

### [Performance Evaluation]:

The multi-layered polyester film of the invention was evaluated as follows:

### (1) Heat-sealing:

The film is cut into a size of 100 mm in the machine direction and 15 mm in the transverse direction. Thus cut, two film pieces are put on top of each other in such a manner that their layers B may face each other, and heat-sealed to a width of 15 mm in the direction perpendicular to the machine direction. The heat-sealing condition is as follows: Using a 15 mm-wide hot bar that is heated at a temperature falling between 80 and 180°C, the film pieces are heat-sealed under a pressure of 0.2 MPa for 2 seconds.

### (2) Measurement of Heat-seal Strength:

Thus heat-sealed, the sample is spread and set on a tensile tester (Strograph Model M by Toyo Seiki Seisakusho) in such a manner that it may be stretched in the machine direction. The chuck-to-chuck distance is 100 mm. In that condition, this is pulled at a rate of 100 mm/min, and the maximum load (kgf/15 mmwidth) at which the sealed part is peeled or broken is measured. This is the heat-seal strength of the sample tested.

### (3) Surface Tension:

Various wettability index standard liquids (by Nacalai Tesque) are tried by separately applying them to the surface of the film in a range of 10 mm wide × 60 mm long, and the liquid having kept its coated area for 2 seconds is selected. The surface tension of the thus-selected liquid on the film is measured.

### (4) Heat Resistance (elasticity retention):

The modulus of elasticity of each film sample is measured at 23°C and 80°C. The ratio of the elasticity at 80°C (E80) to that at 23°C (E23), E80/E23 (%) indicates the heat resistance of the sample.

### (5) Transparency (haze, %):

The haze value (%) of each film sample is measured, using Tokyo Denshoku's Haze Meter.

### (6) Coefficient of Static Friction:

Measured according to ASTM D1894-75.

### Example 1:

The aliphatic polyester resin A obtained in Production Example 1 was used to form an inner layer; and Ecoflex (by BASF), a polyester resin having butanediol-derived structural units, adipic acid-derived structural units and terephthalic acid-derived structural units, was used to form outer layers. These were co-extruded through a two-resin three-layer T-die in such a manner that the resin melt from a 50 mmφ single-screw extruder could form an inner layer and the resin melt from a 30 mmφ single-screw extruder could form two outer layers. The resin discharge and the die lip aperture were so controlled that the overall film thickness could be 25 µm and the thickness ratio of outer layer/inner layer/outer layer could be 1/8/1. Thus co-extruded, this was rapidly cooled on a casting roll to give a multi-layered polyester film having a thickness of 25 µm.

### Example 2:

A 25 µm-thick multi-layered polyester film was produced in the same manner as in Example 1 except that 0.1 parts by weight of silica (Fuji Silicia's Silicia 310) was added to 100 parts by weight of the polyester resin for the outer layers.

### Example 3:

A 25 µm-thick multi-layered polyester film was produced in the same manner as in Example 1 except that 0.2 parts by weight of silica (Fuji Silicia's Silicia 310) and 0.5 parts by weight of surfactant, Neopex F-25 (by Kao) were added to 100 parts by weight of the polyester resin for the outer layers.

### Example 4:

The aliphatic polyester resin A obtained in Production Example 1 was used to form an inner layer; and Ecoflex (by BASF), a polyester resin having butanediol-derived structural units, adipic acid-derived structural units and terephthalic acid-derived structural units, was used to form outer layers. These were co-extruded through a two-resin three-layer T-die in such a manner that the resin melt from a 50 mmφ single-screw extruder could form an inner layer and the resin melt from a 30 mmφ single-screw extruder could form two outer layers. The resin discharge and the die lip aperture were so controlled that the overall film thickness could be 300 µm and the thickness ratio of outer layer/inner layer/outer layer could be 1/8/1. Thus co-extruded, this was rapidly cooled on a casting roll to give a multi-layered polyester film having a thickness of 300 µm. Thus obtained, the film was stretched by 3 times in the machine direction and then by 4 times in the direction perpendicular to the machine direction, and thereafter heat-set at 130°C for 60 seconds. Then, this was cooled in air at 30°C to be an oriented, multi-layered polyester film having a thickness of 25 µm.

### Example 5:

Both surfaces of the multi-layered polyester film obtained in Example 1 were subjected to corona treatment at an intensity of 50 W/m²/min.

### Comparative Example 1:

The aliphatic polyester resin A obtained in Production Example 1 was extruded through a 50 mmφ single-screw extruder to give a polyester film having a thickness of 25 µm.

### Comparative Example 2:

The aliphatic polyester resin A obtained in Production Example 1 was extruded through a 50 mmφ single-screw extruder to give a polyester film having a thickness of 300 µm. Thus produced, the film was stretched by 3 times in the machine direction and then by 4 times in the direction perpendicular to the machine direction, and thereafter heat-set at 130°C for 60 seconds. Then, this was cooled in air at 30°C to be an oriented polyester film having a thickness of 25 µm.

### Comparative Example 3:

The aliphatic polyester resin A obtained in Production Example 1 was used to form an inner layer; and Bionole #1010 (by Showa Polymer), an aliphatic polyester resin with no aromatic dicarboxylic acid-derived structural unit, was used to form outer layers. These were co-extruded through a two-resin three-layer T-die in such a manner that the resin melt from a 50 mmφ single-screw extruder could form an inner layer and the resin melt from a 30 mmφ single-screw extruder could form two outer layers. The resin discharge and the die lip aperture were so controlled that the overall film thickness could be 25 µm and the thickness ratio of outer layer/inner layer/outer layer could be 1/8/1. Thus co-extruded, this was rapidly cooled on a casting roll to give a multi-layered polyester film having a thickness of 25 µm.

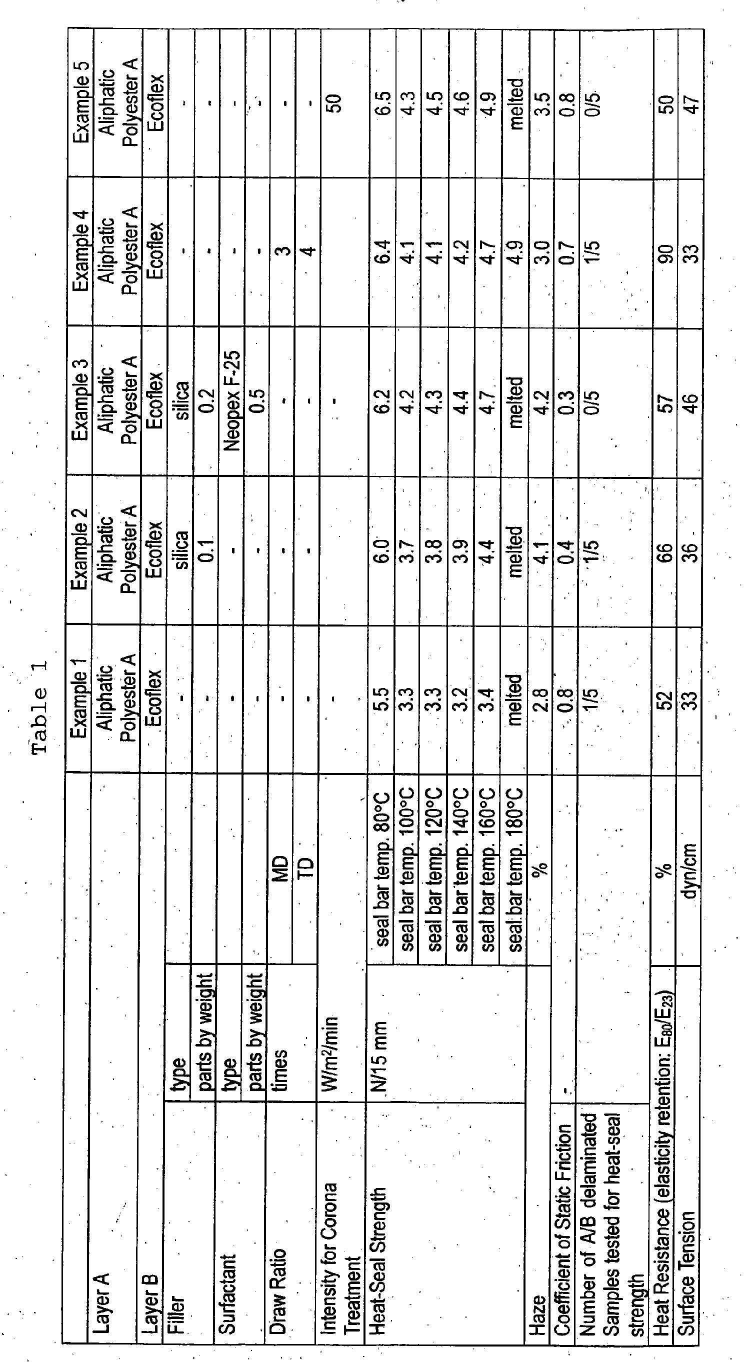

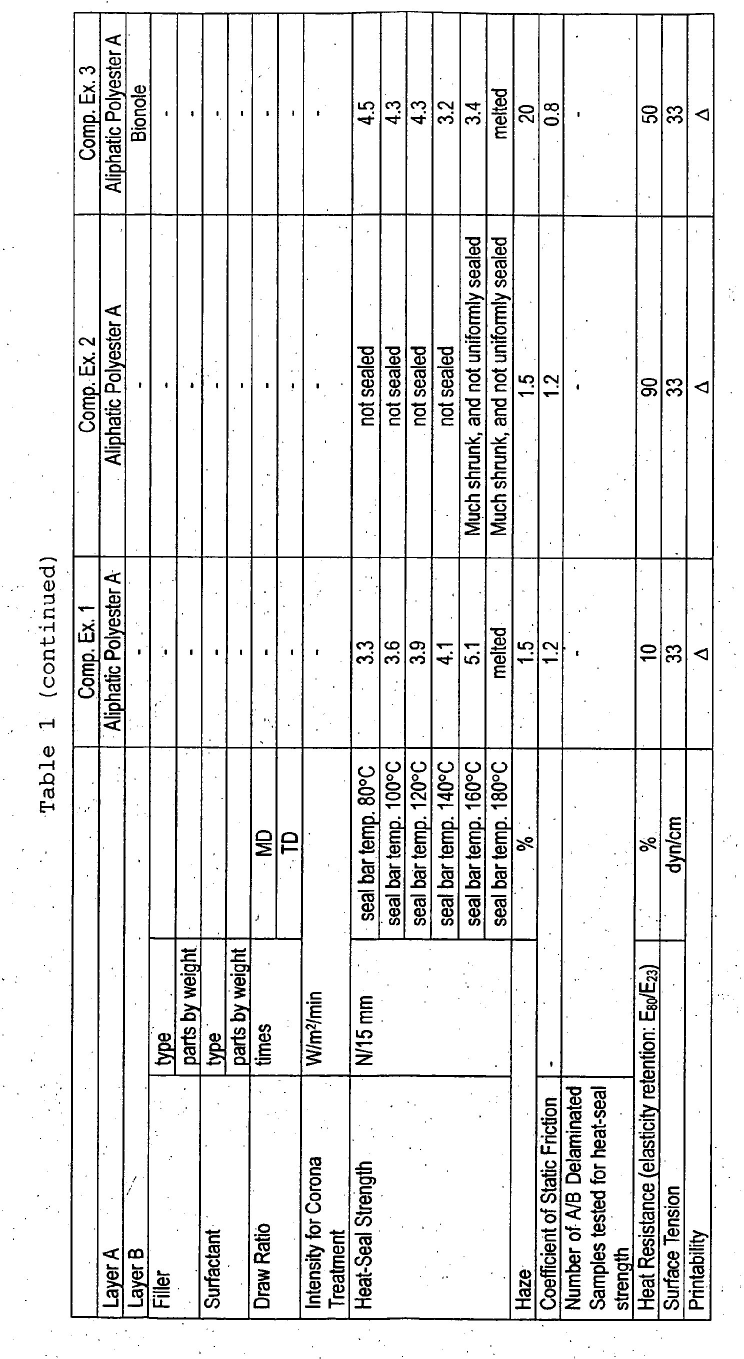

### Example 6:

The 25 µm-thick film obtained in Example 4 was cut into a size of 180 mm long x 500 mm wide, and folded in two in the transverse direction. The two sides running from the folded edge were heat-sealed at 100°C to give a bag having an opening width of about 175 mm and a depth 250 mm.

As described in detail hereinabove with reference to its preferred embodiments, the multi-layered polyester film of the invention has good heat-sealability and transparency and is suitable to secondary working into bags, etc.

## Claims

1. A multi-layered polyester film comprising a layer (layer A) comprising a polyhydroxycarboxylic acid-type aliphatic polyester (polyester A) and a layer (layer B) comprising a diol-dicarboxylic acid polycondensation-type polyester (polyester B) having constitutive components of an aliphatic dicarboxylic acid, an aromatic dicarboxylic acid and an aliphatic diol.

2. The multi-layered polyester film according to claim 1, wherein at least any one layer is at least monoaxially stretched by 1.5 to 7 times.

3. A bag produced by partly heat-sealing the multi-layered film according to claim 1 or 2.
